# EUROPEAN PATENT APPLICATION

(11) **EP 2 280 489 A1**
(43) Date of publication of application: **02.02.2011**
(21) Application number: 09175557.9
(22) Date of filing: 10.11.2009
(51) Int. Cl.: H04B 1/38

(54) **Contactless adaptor device**

(30) Priority: 31.07.2009 WO PCT/CN2009/000858
(71) Applicant: Gemalto SA, 92190 Meudon (FR)
(72) Inventor: Wilianto, Wu, 92190, MEUDON (FR)

(57) **Abstract**

The invention provides an adaptor device to be inserted inside the handset and connected to the SIM card for emulating an NFC interface not present in the handset. The adaptor device comprises a flexible Printed Circuit Board (PCB) having two opposite sides. The PCB comprises an electromagnetic antenna constituted of conductive turns printed on a conductive layer, a connector part having a smartcard connector according ISO 7816 standard, said smart card connector being printed on the two sides of the printed circuit board and having an electric contact between the two sides of the printed circuit board, and an integrated circuit having a plurality of pads for connecting, on one hand, the antenna turns, and on the other hand, several contacts area of the smart card connector, wherein said integrated circuit translates messages between a wireless standard and a Single Wire Protocol standard.

## Description

The present invention relates to a contactless adaptor device. More particularly, the invention relates to an adaptor device for enabling a near-field communication with a SIM card with mobile phones that do not implement such communication channel.

Near-field communication relates to communication using electromagnetic field in very short distance. As an example, ISO 14443 is a standard that defines some Near-Field Communication (NFC) between a smartcard and a reader. NFC is commonly used for physical access to buildings or to transportation network and also for payment.

Today, there is a wish to reduce the number of smartcards by using multi-application cards. This also enables to enlarge the numbers of services that may be provided by the card provider. Today, mobile phone operators want to include some payment means in the mobile phones supported by the SIM card which is secured like a banking card. The basic idea consists in using the phone for small payment operation and/or for accessing transportation network.

For this purpose, the European Telecommunication Standard Institute (ETSI) has adopted to include a contactless interface of a NFC type into the mobile phone for communicating with the Subscriber Identity Module (SIM) card by means of a Single Wire Protocol (SWP). For more information regarding SWP, the man of the art can have a look on (thank to identify the standard) The NFC interface of the phone can be used even if the mobile phone is powered off. For implementing the service, it is necessary to have an adapted smartcard together with an adapted mobile phone.

On the smartcard side, the smart card must support an additional communication interface and which is already done for several smartcard chips and all the mobile phone operators can be now supplied with the corresponding smartcards.

On the mobile phone side, it will take much more time for having all handset types including the NFC interface. A final user shall change mobile if he wants to implement the NFC services and this overcost for the final user may delay the full deployment of these new services. In addition, handset manufacturers will not change all their models at a same time. It is also possible that some low-end handset will never include the NFC and SWP interfaces for cost reason.

Apparently, it is not possible to use the NFC capabilities of SIM without an adapted handset but for accelerating the deployment and reducing the cost on the mobile handsets, a real problem exists.

The invention provides an adaptor device to be inserted inside the handset and connected to the SIM card for replacing the NFC interface of the handset. With such adaptor, any handset can be used with a smartcard supporting SWP for enabling NFC services.

More particularly, the invention is a contactless adaptor device comprising a flexible printed circuit board having two opposite sides. The flexible printed circuit board supports an electromagnetic antenna, a connector part and an integrated circuit. The electromagnetic antenna is constituted of conductive turns printed on a conductive layer of said flexible printed circuit board. The connector part having a smartcard connector according ISO 7816 standard, said smart card connector having a plurality of contact areas, said smart card connector being printed on the two sides of the printed circuit board and having an electric contact between the two sides of the printed circuit board. The integrated circuit has a plurality of pads for connecting, on one hand, the antenna turns, and on the other hand, several contacts area of the smart card connector, wherein said integrated circuit translates messages between a wireless standard and a single wire protocol standard.

Preferentially, the plurality of pads for connecting the smart card connector consists in three electrical lines, two lines being for power supply and one line being for data exchange. The several contacts areas of the smart card may comprise power supply contacts for receiving energy or for providing energy to the smart card. The wireless standard is ISO 14443 standard. The single wire protocol standard is ETSI SWP 102 613. The device of claim 1, wherein the flexible printed circuit board is bendable and foldable to fit into a mobile phone having its connector part inserted between the handset and a smart card having a function of subscriber identity module.

The advantage of the present invention will become apparent from the following description of several embodiments with reference to the accompanying drawings, in which :
Figure 1 is a schematic view of a preferred embodiment of the invention;
Figure 2 is a schematic cross section of a mobile phone showing the use of the invention; and
Figures 3a to 3c show different variant of the connector of the invention.

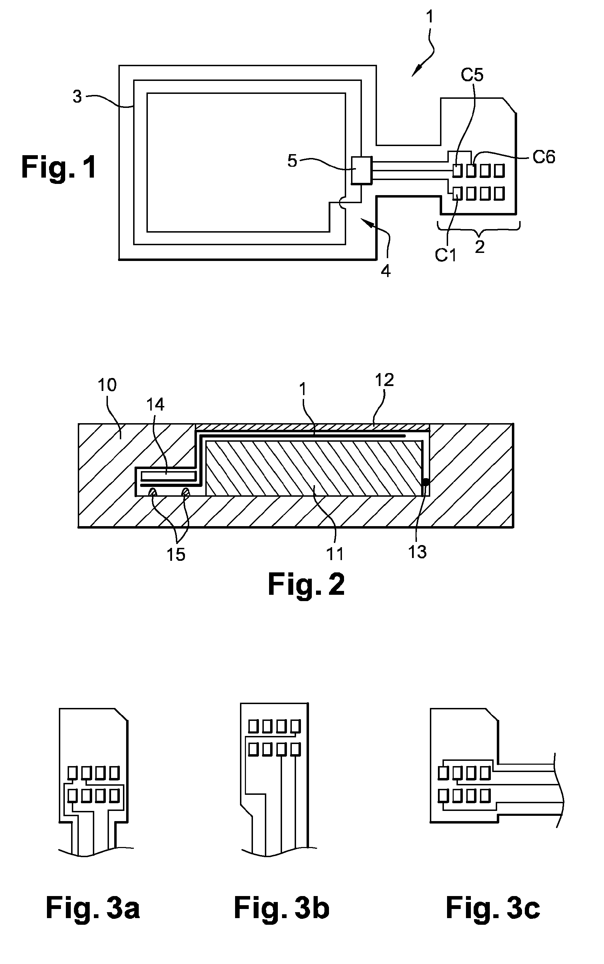

As indicated, the invention is a contactless adaptor device as shown on figure 1. The adaptor device 1 is made with a thin and flexible Printed Circuit Board (PCB), having a thickness of few hundred µm. Said PCB is made of an insulating substrate layer supporting two conductive metallization on each side, the metallization being connected from one to the other by via crossing the insulating layer.

The PCB comprises a connector part 2 supporting on both sides a smart card connector according to ISO 7816. The electrical contact between the connector of each side is made in such a way that the insertion of this connector part between a smart card and the reader allows the communication between the card and the reader. As well known, a smart card connector having a plurality of contact areas called C1 to C8 in ISO 7816 standard. For the invention, only C1, C5 and C6 are used but the other contact are maintained for the communication for the smart card with its reader.

On the main part on the PCB, there is an electromagnetic antenna 3 in conformity with ISO 14443. Such an antenna 3 is constituted of turns made in one conductive layer, the opposite layer being used for the wire crossing 4.

An Integrated Circuit 5 is mounted on the PCB without any case and preferably the IC 5 is a thin IC, for example with a thickness around 150µm or thinner. The IC can be glued face to the board for preventing any additional bonding. The IC 5 is a translator between ISO 14443 and a Single Wire Protocol. To this aim, the IC 5 comprises two pads connected to the antenna 3 and three pads respectively connected to C1, C5 and C6.

C1 and C5 correspond to the contactareas of power supply. When the device is inserted into the mobile phone and when the phone is power on, C1 and C5 are supplied in energy by the phone battery. This power supply is detected and used for supplying the IC 5 is the field level of the antenna is not sufficient for supply all the circuit. If the mobile phone is power off, the IC 5 may be completely supplied by the antenna and can also supply the smard card if the electromagnetic field is sufficiently high.

C6 is dedicated for SWP in which the IC 5 is the master sending message by voltage modulation, and in which the smart card is the slave sending by current modulation. The translation between ISO 14443 and ETSI SWP 102 613.

Now on figure 2, it can be seen how the invention is used. A mobile phone 10 always comprises a removable battery placed into a cavity closed by a hood 12. Said battery being connected to the handset by means of elastic contact 13 that ensure a small pressure on the battery that ensure the contact with the battery which comprise a play of few hundreds of µm to be easily placed or removed into the cavity.

Commonly, this cavity also comprise another cavity beside (or sometimes under) the battery for receiving the SIM card 14. The card reader part of the handset communicate with the card by means of contacts 15 which are also elastic for insuring the placement of the card and a good electric contact with the contact area of the card.

For placing the invention into the handset, we need first to remove the battery 11 and the SIM card 14. Then we place the contact part 2 of the adaptor 1 into the card place, the introduction of the SIM card 14 fixing the contact part 2 between the SIM card 14 and the contacts 15. The adaptor is folded for placing the battery 11 into the cavity and folded again for closing the hood 12. The antenna 3 is functionally placed between the hood 12 and the battery 11 in such a way to minimize the radiation generated by the handset circuits.

The use of a flexible and thin PCB together with a thin IC enable such a placement of the adaptor device into the few hundreds of µm of play into the battery case. As an example, the PCB and the IC must have a thickness lower than 500 µm.

In addition, SIM cards are not inserted in the same manner, depending of the phone. So for overcoming this problem the solution is to provide adaptors with different connector parts, as shown on figures 3a, 3b and 3c. So it is possible to sold several kinds of adaptors each adaptor corresponding to a plurality of handsets.

## Claims

1. A contactless adaptor device (1) comprising a flexible printed circuit board having two opposite sides which supports:
- an electromagnetic antenna (3) constituted of conductive turns printed on a conductive layer,
- a connector part (2) having a smartcard connector according ISO 7816 standard, said smart card connector having a plurality of contact areas, said smart card connector being printed on the two sides of the printed circuit board and having an electric contact between the two sides of the printed circuit board, and
- an integrated circuit (5) having a plurality of pads for connecting, on one hand, the antenna turns (3), and on the other hand, several contacts area (C1, C5, C6) of the smart card connector (2), wherein said integrated circuit (5) translates messages between a wireless standard and a single wire protocol standard.

2. The device of claim 1, wherein the several contacts areas (C1, C5, C6) of the smart card comprise power supply contacts (C1, C5) for receiving energy or for providing energy to the smart card.

3. The device of claim 1, wherein the wireless standard is ISO 14443 standard.

4. The device of claim 1, wherein the single wire protocol standard is ETSI SWP 102 613.

5. The device of claim 1, wherein the flexible printed circuit board is bendable and foldable to fit into a mobile phone having its connector part inserted between the handset and a smart card having a function of subscriber identity module.

6. The device of claim 1, wherein the plurality of pads for connecting the smart card connector consists in three electrical lines, two lines being for power supply and one line being for data exchange.
